# EUROPEAN PATENT APPLICATION

(11) **EP 1 479 857 A1**
(43) Date of publication of application: **24.11.2004**
(21) Application number: 04011933.1
(22) Date of filing: 19.05.2004
(51) Int. Cl.: E05B 17/10, B60Q 1/32

(54) **Car door handle module**

(30) Priority: 20.05.2003 CN 03123764
(71) Applicant: Exon Science Inc., Guei Shan Hsiang&Taoyuan,Taiwan 333 (TW)
(72) Inventor: Su, Wen-Wei, Guei Shan Hsiang Taoyuan Taiwan 333 (TW); Chen, Kuei-Hung, Guei Shan Hsiang Taoyuan Taiwan 333 (TW); Hsiao, Shun-Hsiang, Guei Shan Hsiang Taoyuan Taiwan 333 (TW); Wu, Hsien-Jen, Guei Shan Hsiang Taoyuan Taiwan 333 (TW)
(74) Representative: Winkler, Andreas, Dr.

(57) **Abstract**

A door handle module of a car optionally illuminates for locating and/or safety purposes. The illuminating portion (33) of the door handle module can be arranged on either the handle portion (32) or the base portion (31). When the driver unlocks the door, particularly when practiced via a remote car controller, the illuminating portion (33) of the door handle module emits light so that the driver can find the handle portion (32) easily to open the door. On the other hand, when the driver or passenger is ready to get off the car, the illumination portion (33) also emits light to warn the oncoming vehicles or pedestrians to prevent from hitting on the opening door.

## Description

The present invention relates to a door handle module and more particularly to an outside door handle module with illumination function for use in a vehicle.

With the versatile commands of drivers on cars, car manufacturers make lots of efforts to develop and improve not only the power-related system of a car but also the accessories of the car. One of the examples relates to car door handles.

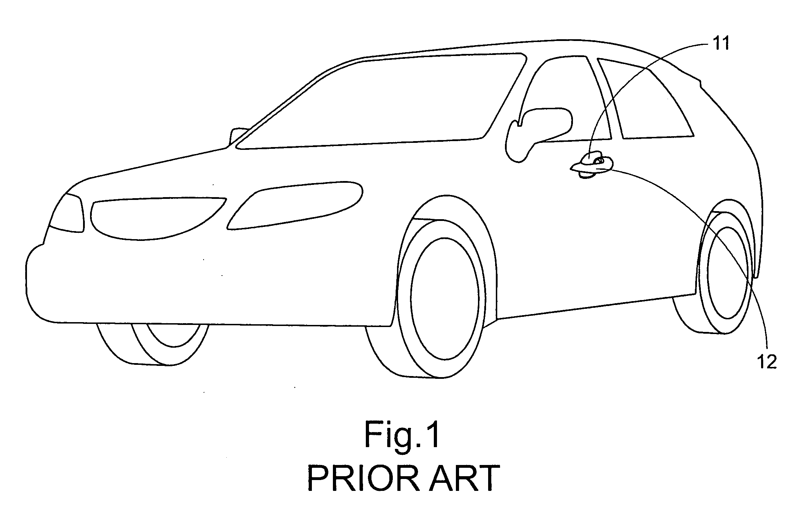

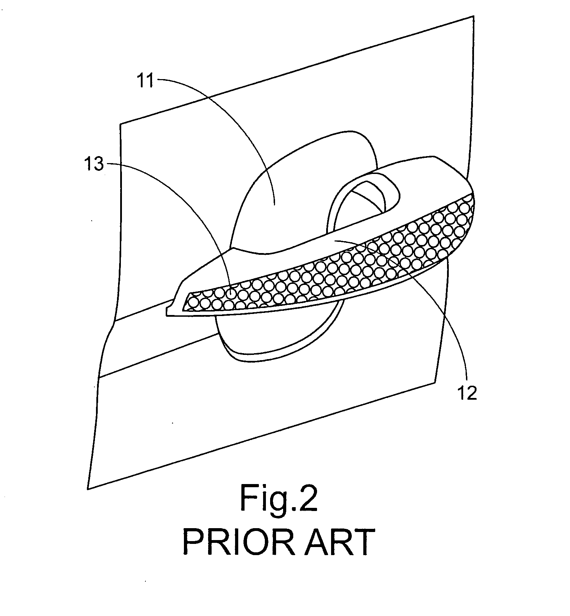

Please refer to Fig. 1 which shows a conventional car door handle for being manipulated to open the car door. The shape and material of a car door handle may vary with requirements. Nevertheless, a car door handle generally includes a base portion 11 and a handle portion 12. The handle portion is mounted on the base portion to be held by the user and pulled or pushed to open the door. For decoration, a lamp module 13 has been developed to become an annex of the car door handle, as illustrated in Fig. 2 and as disclosed in German Patent Publication No. DE 100 60 780 A1 filed December 7, 2000, which is incorporated herein for reference. Since a door handle lamp is additionally mounted to the car door handle, it will be expected for more functions aside from decoration

The present invention provides a door handle module with illumination function that is enabled for locating and/or safety purposes

A first aspect of the present invention relates to a door handle module of a vehicle, which comprises a main body mounted on a door of the vehicle and manipulated to open the door; and an illumination portion attached to the main body for automatically emitting light in response to a door control signal.

In an embodiment, the main body comprises a base portion fixed on the door and a handle portion coupled to the base portion to be manipulated to open the door.

In an embodiment, the illumination portion is arranged on the base portion. Alternatively, the illumination portion is arranged on the outside surface of the handle portion opposite the base portion or the inside surface of the handle portion facing the base portion.

For example, the illumination portion can include one or more bulbs, light-emitting diodes (LEDs) or electroluminescent (EL) emitters.

In an embodiment, the door control signal is asserted when the vehicle is unlocked via a key.

In an embodiment, the door control signal is asserted when the vehicle is unlocked via a remote controller.

In an embodiment, the door control signal is asserted when the vehicle is unlocked via a central control lock/unlock switch inside the vehicle.

In an embodiment, the door control signal is asserted when the handle portion is manipulated to open the door.

In an embodiment, the door control signal is asserted when an inside handle of the vehicle corresponding to the handle portion is manipulated to open the door.

A second aspect of the present invention relates to a door handle module of a vehicle, which comprises a main body mounted on a door of the vehicle and manipulated to open the door; and an illumination portion attached to the main body for automatically emitting light in response to an indication control signal.

In an embodiment, the indication control signal is asserted when the direction indicator light of the vehicle is enabled.

In an embodiment, the indication control signal is asserted when the brake indicator light of the vehicle is enabled.

In an embodiment, the indication control signal is asserted when the emergency indicator light of the vehicle is enabled.

In an embodiment, the indication control signal is asserted when the headlamp light of the vehicle is enabled.

A third aspect of the present invention relates to a door handle module of a vehicle, which comprises a main body mounted on a door of the vehicle and manipulated to open the door, and an illumination portion attached to the main body for automatically emitting light in response to a light control signal.

In an embodiment, the light control signal is asserted when a selected button of the remote car controller is enabled.

The present invention may best be understood through the following description with reference to the accompanying drawings, in which:
Fig. 1 is a schematic diagram showing a car with a conventional outside door handle;
Fig. 2 is a schematic diagram showing another conventional outside door handle with a lamp module;
Fig. 3 is a schematic diagram showing an embodiment of a door handle module according to the present invention;
Fig. 4 is a schematic diagram showing another embodiment of a door handle module according to the present invention;
Fig. 5 is a schematic diagram showing a further embodiment of a door handle module according to the present invention; and

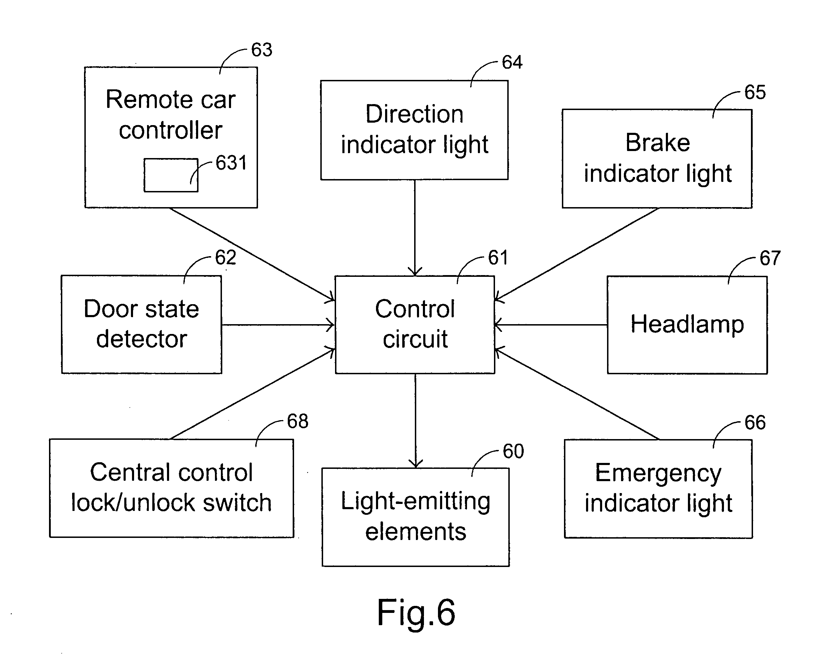

Fig. 6 is a functional block diagram of the illumination control system for illustrating the illuminating timing of the door handle module according to the present invention.

The present invention will now be described more specifically with reference to the following embodiments. It is to be noted that the following descriptions of preferred embodiments of this invention are presented herein for purpose of illustration and description only; it is not intended to be exhaustive or to be limited to the precise form disclosed.

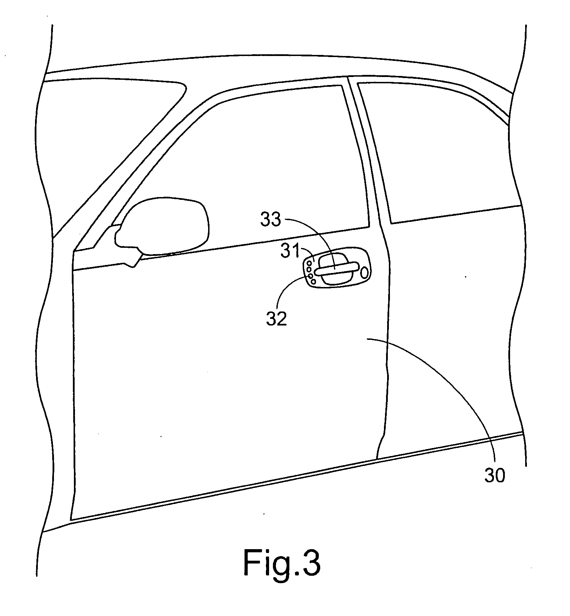

Please refer to Fig. 3 in which an embodiment of a door handle module according to the present invention is illustrated. The door handle module of a vehicle includes a base portion 31, a handle portion 32 and an illumination portion 33. The base portion 31 is fixed on the car door 30, the handle portion 32 is pivotally coupled to the base portion 31 and the illumination portion 33 is mounted on the base portion 31. When the driver unlocks the door via a car key or a remote car controller it is expected that the door is to be open. Therefore, the illumination portion 33 automatically emits light to help the driver locate the handle portion 32. This is particularly helpful when the car is unlocked via a remote controller in a dark environment. The illumination function of the door handle module also works to warn the oncoming vehicles or pedestrians to prevent from hitting on the opening door. Further, when the driver or passenger sitting inside the car is going to get off the car and thus manipulates the central control lock/unlock switch inside the vehicle or the inside door handle corresponding to the handle portion 32 for opening the same door, the illumination portion 33 also automatically emits light to warn the oncoming vehicles or pedestrians to prevent from hitting on the opening door.

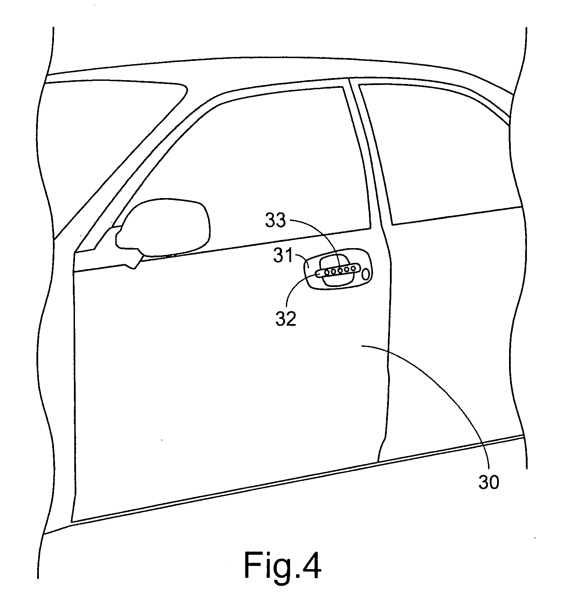

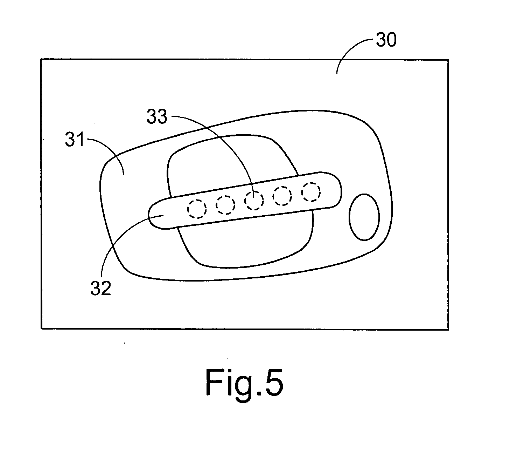

The illumination portion 33, in addition to the arrangement on the base portion 31, can also be disposed on the handle portion 32. In Fig. 4, the illumination portion 33 is arranged on the outside surface opposite the base portion 31 so that people can see the emitted light directly. Alternatively, as shown in Fig. 5, the illumination portion 33 can be arranged on the inside surface facing the base portion 31, and the emitted light is reflected by the base portion to be seen. In this embodiment, by properly designing the curvature of the base portion 31, the illuminated area can be adjusted.

In the above embodiments, the emitting elements 60 of the illumination portion, e.g. one or more bulbs, light-emitting diodes (LEDs) or electroluminescent (EL) emitters, automatically emit light in response to a door control signal. This function can be achieved by allowing the control circuit 61 of the illumination portion to communicate with the door state detector 62 so as to realize if the door is being opened. In addition, the control circuit 61 of the illumination portion can also be in communication with the remote car controller 63. By pressing a selected button 631 on the remote car controller 63 to assert a light control signal, the emitting elements 60 of the illumination portion will emit light to show the situation around the door handle. Further, the control circuit 61 of the illumination portion can be in communication with a variety of vehicular indicators such as direction indicator lights 64, brake indicator lights 65, emergency indicator lights 66 and/or headlamps 67, etc. It is understood that when the direction indicator light, brake indication light, emergency indicator light and/or headlamp light are enabled, a car state change is conducted. Meanwhile, it is important to warn others of the state change so as to avoid any undesired accident. Therefore, it is desirable that the emitting elements 60 of the illumination portion be actuated in response to the indication control signal asserted by these indicator devices.

From the above description, it is understood that by incorporating an illumination portion in the door handle module, the door handle module can be easily located. By well controlling the light-emitting timing of the illumination portion to warn the surroundings, some danger might be avoided. According to the present invention, the illumination portion provided to the door handle module functions more than just decoration.

The features disclosed in the foregoing description, in the claims and/or in the accompanying drawings may, both separately and in any combination thereof, be material for realizing the invention in diverse forms thereof.

## Claims

1. A door handle module of a vehicle, comprising a main body mounted on a door of the vehicle and manipulated to open the door, and **characterized by** further comprising an illumination portion attached to the main body for automatically emitting light in response to a door control signal.

2. The door handle module according to claim 1, **characterized in that** the main body comprises a base portion fixed on the door and a handle portion coupled to the base portion to be manipulated to open the door.

3. The door handle module according to claim 2, **characterized in that** the illumination portion is arranged on the base portion, the outside surface of the handle portion opposite the base portion or the inside surface of the handle portion facing the base portion.

4. The door handle module according to claim 1, **characterized in that** the illumination portion includes at least one bulb, light-emitting diode (LED) or electroluminescent (EL) emitter.

5. The door handle module according to claim 1, **characterized in that** the door control signal is asserted when the vehicle is unlocked via a key, a remote controller or a central control lock/unlock switch inside the vehicle.

6. The door handle module according to claim 1, **characterized in that** the door control signal is asserted when the handle portion or an inside handle of the vehicle corresponding to the handle portion is manipulated to open the door.

7. A door handle module of a vehicle, comprising a main body mounted on a door of the vehicle and manipulated to open the door, and **characterized by** further comprising an illumination portion attached to the main body for automatically emitting light in response to an indication control signal.

8. The door handle module according to claim 7, **characterized in that** the main body comprises a base portion fixed on the door and a handle portion coupled to the base portion to be manipulated to open the door.

9. The door handle module according to claim 8, **characterized in that** the illumination portion is arranged on the base portion, the outside surface of the handle portion opposite the base portion or the inside surface of the handle portion facing the base portion.

10. The door handle module according to claim 7, **characterized in that** the illumination portion includes at least one bulb, light-emitting diode (LED) or electroluminescent (EL) emitter.

11. The door handle module according to claim 7 wherein the indication control signal is asserted when the direction indicator light, brake indicator light, emergency indicator light or headlamp light of the vehicle is enabled.

12. A door handle module of a vehicle, comprising a main body mounted on a door of the vehicle and manipulated to open the door, and **characterized by** further comprising an illumination portion attached to the main body for emitting light in response to a light control signal.

13. The door handle module according to claim 12, **characterized in that** the light control signal is asserted when a selected button of the remote car controller is enabled.
